# EUROPEAN PATENT APPLICATION

(11) **EP 4 785 804 A1**
(43) Date of publication of application: **05.08.2026**
(21) Application number: 25763729.8
(22) Date of filing: 26.02.2025
(51) Int. Cl.: A23G 9/04

(54) **COLD DRINK MACHINE**

(30) Priority: 13.12.2024 CN 202411842325
(71) Applicant: Guangdong Welly Electrical Appliances Co., Ltd., Zhongshan Guangdong 528400 (CN)
(72) Inventor: WU, Xiangan, Zhongshan, Guangdong 528400 (CN); MAI, Linjun, Zhongshan, Guangdong 528400 (CN); MA, Yangyang, Zhongshan, Guangdong 528400 (CN); HU, Wenzhan, Zhongshan, Guangdong 528400 (CN)
(74) Representative: HGF
(86) International application number: PCT/CN2025/079278
(87) International publication number: WO 2026/123471

(57) **Abstract**

The present disclosure provides a cold drink machine. The cold drink machine includes a chassis, a separator substrate arranged within the chassis, a cold drink apparatus for making cold drinks, and a compressor for the cold drink apparatus to refrigerate. The chassis is divided into an upper device space and a lower device space by the separator substrate, and the cold drink apparatus and the compressor are arranged in the upper device space and the lower device space, respectively. The cold drink apparatus includes an evaporator, a cold drink tank arranged within the evaporator, a stirring member arranged within the cold drink tank, and a driving apparatus for driving the stirring member. A front portion or a top portion of the chassis is provided with a display region, and the top portion of the chassis is provided with a feeding region. In the feeding region, the top portion of the chassis is concave to form a feeding groove, a detachable feeding hopper is arranged within the feeding groove, and the feeding hopper communicates with the cold drink tank. In this manner, the structure is compact and reasonable and is easy to clean.

## Description

### TECHNICAL FIELD

The present disclosure relates to the technical field of refrigeration devices and, in particular, to a cold drink machine.

### BACKGROUND

As efficient, convenient, and multifunctional cold drink-making devices, cold drink machines are widely applied in various dining establishments or home kitchens. In particular, the intelligence of an existing cold drink-making device requires the chassis of the device to accommodate more functional components, and based on a heat dissipation requirement, a mounting space needs to be reserved for different components. In particular, a cold drink device generates a large amount of heat during operation, and when an intelligent element is added, a high-temperature operation also needs to be considered.

On the other hand, an existing cold drink machine typically has a certain internal cleaning function, but a feeding port of the cold drink machine typically requires manual external cleaning. In this case, the machine body is inevitably wetted during the cleaning process, causing water to accidentally enter the chassis.

### SUMMARY

The technical problem to be solved by embodiments of the present disclosure is to provide a cold drink machine that has a compact and reasonable structure and is easy to clean.

To solve the preceding technical problem, embodiments of the present disclosure provide a cold drink machine. The cold drink machine includes a chassis, a separator substrate arranged within the chassis, a cold drink apparatus configured for making cold drinks, and a compressor for the cold drink apparatus to refrigerate.

The chassis is divided into an upper device space and a lower device space by the separator substrate, and the cold drink apparatus and the compressor are arranged in the upper device space and the lower device space, respectively.

The cold drink apparatus includes an evaporator, a cold drink tank arranged within the evaporator, a stirring member arranged within the cold drink tank, and a driving apparatus for driving the stirring member.

A front portion or a top portion of the chassis is provided with a display region, and the top portion of the chassis is provided with a feeding region.

In the feeding region, the top portion of the chassis is concave to form a feeding groove, a detachable feeding hopper is arranged within the feeding groove, and the feeding hopper communicates with the cold drink tank.

As an improvement for the preceding solution, in the display region, the front portion or the top portion of the chassis is tilted upward to form a display space within the chassis for mounting a display screen device, and the display region is provided with a display port for mounting a display panel.

As an improvement for the preceding solution, the upper device space is divided into a refrigeration space and a driving heat dissipation space on the left and right, and the evaporator and the driving apparatus are placed in the refrigeration space and the driving heat dissipation space, respectively; and on the chassis, a left end of the upper device space and a right end of the upper device space are provided with a discharging hole adapted to the cold drink tank and an upper heat dissipation port for heat dissipation, respectively.

As an improvement for the preceding solution, the separator substrate is provided with a communication region for communicating the upper device space and the lower device space, and the communication region is provided with multiple communication holes; and the communication region is arranged corresponding to the driving heat dissipation space.

As an improvement for the preceding solution, two sides within the lower device space are provided with a bracket for assisting in supporting the separator substrate and a heat exchange housing for mounting a heat exchanger, respectively; and the bracket and the heat exchange housing jointly assist in supporting the separator substrate.

As an improvement for the preceding solution, the heat exchanger configured for the compressor is arranged within the heat exchange housing, an inner side of the heat exchange housing is provided with a cooling fan, and the cooling fan is located below the communication region.

As an improvement for the preceding solution, a bottom of the feeding groove is provided with a communication pipe communicating with the cold drink tank; and a shape of the feeding hopper is adapted to the feeding groove to cover a surface of the feeding groove.

As an improvement for the preceding solution, the evaporator is provided with a heat-insulating housing, a sidewall of the heat-insulating housing is provided with a first mounting hole, and the driving apparatus includes a rotating shaft for driving the stirring member to rotate and a first sealing connection seat; the cold drink tank is mounted within the heat-insulating housing, the cold drink tank is provided with a second mounting hole, and the rotating shaft is configured to rotatably penetrate through the second mounting hole and the first mounting hole; the first sealing connection seat is connected between the heat-insulating housing and the cold drink tank, the first sealing connection seat is connected to a limiting member, the limiting member is configured to be inserted into the second mounting hole, and the limiting member is sealingly connected to the second mounting hole; and the rotating shaft is configured to penetrate through the limiting member, a first sealing member is provided between the rotating shaft and the limiting member, an inner ring of the first sealing member is sealingly connected to the rotating shaft, and a clearance fit is formed between an outer ring of the first sealing member and the limiting member.

As an improvement for the preceding solution, an end of the limiting member that is inserted into the second mounting hole is formed with an extension boss, an outer ring of the extension boss sealingly abuts against an inner sidewall of the cold drink tank via a sealing gasket, and an inner ring of the extension boss is connected to the outer ring of the first sealing member; and one side of the first sealing member facing away from the cold drink tank is provided with a second sealing member, and an inner ring of the second sealing member is sealingly connected to the rotating shaft.

As an improvement for the preceding solution, the driving apparatus further includes a second sealing connection seat that is arranged on an outer sidewall of the heat-insulating housing, the second sealing connection seat is detachably connected to the first sealing connection seat, and a size of the second sealing connection seat is larger than a size of the first mounting hole; one side of the second sealing connection seat facing the first sealing connection seat is formed with a sealing boss, the first sealing connection seat is formed with an insertion hole, the sealing boss is configured to be inserted into the insertion hole, and an inner side of the sealing boss abuts against the second sealing member; and the outer sidewall of the heat-insulating housing is formed with a first mounting groove, and the second sealing connection seat is embedded into the first mounting groove.

As an improvement for the preceding solution, the driving apparatus further includes a driving connection seat, one side surface of the driving connection seat is connected to the second sealing connection seat, and the other side surface of the driving connection seat is connected to a driving member; a transmission group is provided within the driving connection seat, an output shaft of the driving member is rotatably connected to a driving end of the transmission group, and a driven end of the transmission group is rotatably connected to the rotating shaft; and a side surface of the second sealing connection seat facing away from the heat-insulating housing is formed with a second mounting groove, and the one side surface of the driving connection seat is embedded into the second mounting groove.

As an improvement for the preceding solution, the cold drink machine is an ice cream machine, a smoothie machine, or a multifunctional machine for making smoothies and ice cream.

The embodiments of the present disclosure have the beneficial effects below.

The embodiments of the present disclosure provide the cold drink machine. The cold drink machine includes the chassis, the separator substrate arranged within the chassis, the cold drink apparatus for making cold drinks, and the compressor for the cold drink apparatus to refrigerate. The chassis is divided into the upper device space and the lower device space by the separator substrate, and the cold drink apparatus and the compressor are arranged in the upper device space and the lower device space, respectively. The cold drink apparatus includes the evaporator, the cold drink tank arranged within the evaporator, the stirring member arranged within the cold drink tank, and the driving apparatus for driving the stirring member. Therefore, the arrangement of the separator substrate can isolate a hot operation space from a cold operation space.

The front portion or the top portion of the chassis is provided with the display region, and the top portion of the chassis is provided with the feeding region. In the feeding region, the top portion of the chassis is concave to form the feeding groove, the detachable feeding hopper is arranged within the feeding groove, and the feeding hopper communicates with the cold drink tank. Therefore, after use, only the feeding hopper needs to be cleaned, without cleaning the entire machine, which is convenient and quick.

### BRIEF DESCRIPTION OF DRAWINGS

FIG. 1 is a perspective view of a cold drink machine according to the present disclosure.
FIG. 2 is a sectional view of a cold drink machine according to the present disclosure.
FIG. 3 is a perspective view of a cold drink apparatus according to the present disclosure.
FIG. 4 is an exploded view of a cold drink apparatus according to the present disclosure.
FIG. 5 is a view of the connection between a first sealing connection seat and a second sealing connection seat according to the present disclosure.
FIG. 6 is a cross-sectional view of a cold drink apparatus according to the present disclosure.
FIG. 7 is an enlarged view of part A in FIG. 6.
FIG. 8 is a perspective view of a heat-insulating housing according to the present disclosure.

### DETAILED DESCRIPTION

Objectives, technical solutions, and advantages of the present disclosure will be more apparent from the detailed description of the present disclosure in conjunction with the drawings.

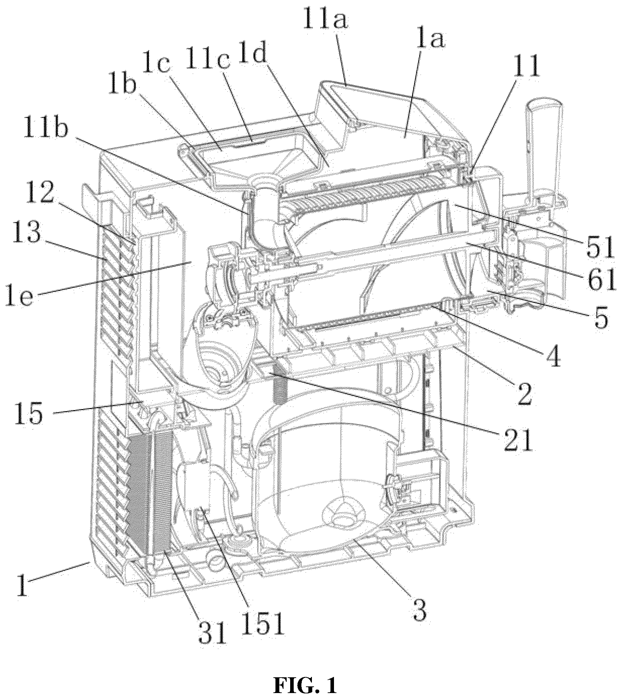

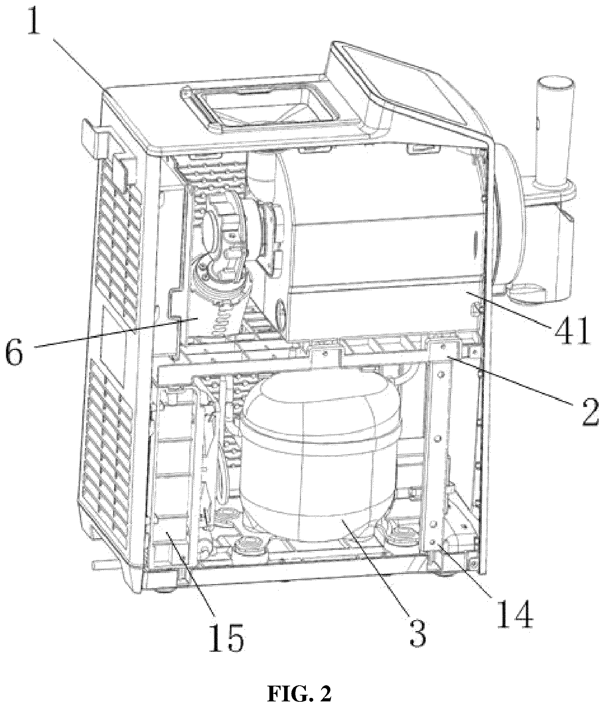

Referring to FIGS. 1 and 2, embodiments of the present disclosure provide a cold drink machine. The cold drink machine includes a chassis 1, a separator substrate 2 arranged within the chassis 1, a cold drink apparatus for making cold drinks, and a compressor 3 for the cold drink apparatus to refrigerate. The chassis 1 is divided into an upper device space and a lower device space by the separator substrate 2, and the cold drink apparatus and the compressor 3 are arranged in the upper device space and the lower device space, respectively.

The cold drink apparatus includes an evaporator 4, a cold drink tank 5 arranged within the evaporator 4, a stirring member 51 arranged within the cold drink tank 5, and a driving apparatus 6 for driving the stirring member 51.

A front portion or a top portion of the chassis 1 is provided with a display region, and the top portion of the chassis is provided with a feeding region.

In the display region, the front portion or the top portion of the chassis 1 is tilted upward to form a display space 1a within the chassis 1 for mounting a display screen device, and the display region is provided with a display port 11a for mounting a display panel. This configuration can allow the display panel mounted in the display port 11a to face the user's field of view during operation, thereby making it easier to operate and view the display panel.

In the feeding region, the top portion of the chassis 1 is concave to form a feeding groove 1b, a detachable feeding hopper 1c is arranged within the feeding groove 1b, and the feeding hopper 1c communicates with the cold drink tank 5.

Specifically, the upper device space is divided into a refrigeration space 1d and a driving heat dissipation space 1e on the left and right, and the evaporator 4 and the driving apparatus 6 are placed in the refrigeration space 1d and the driving heat dissipation space 1e, respectively.

On the chassis 1, a left end of the upper device space and a right end of the upper device space are provided with a discharging hole 11 adapted to the cold drink tank 5 and an upper heat dissipation port 12 for heat dissipation, respectively. Preferably, the upper heat dissipation port 12 is provided with a heat dissipation plate 13, and the heat dissipation plate 13 is provided with multiple heat dissipation channels.

To improve the structural compactness within the chassis 1 while ensuring a certain heat dissipation performance, the separator substrate 2 is provided with a communication region for communicating the upper device space and the lower device space, the communication region is provided with multiple communication holes 21, and the communication region is arranged corresponding to the driving heat dissipation space 1e.

Moreover, two sides within the lower device space are provided with a bracket 14 for assisting in supporting the separator substrate 2 and a heat exchange housing 15 for mounting a heat exchanger, respectively; the bracket 14 and the heat exchange housing 15 jointly assist in supporting the separator substrate 2.

The heat exchanger 31 configured for the compressor 3 is arranged within the heat exchange housing 15, an inner side of the heat exchange housing 15 is provided with a cooling fan 151, and the cooling fan 151 is located below the communication region. Correspondingly, the chassis 1 is provided with a lower heat dissipation port corresponding to the heat exchange housing 15, and the lower heat dissipation port is also provided with the heat dissipation plate 13.

Based on the arrangement of the communication holes 21, the cooling fan 151 located below the communication region enables air in the upper device space to flow into the lower device space and be discharged from the lower heat dissipation port during the process of exhausting and dissipating heat to the lower heat dissipation port. Therefore, the heat generated in the lower device space is difficult to flow into the upper device space, and based on a negative pressure, external air flows from the upper heat dissipation port 12 into the driving heat dissipation space 1e, thereby cooling devices arranged within the driving heat dissipation space 1e. Therefore, an electronic control device may be arranged within the driving heat dissipation space 1e. Therefore, only a single and small-sized cooling fan 151 is required in the chassis 1 to dissipate heat in the upper device space and the lower device space, thereby providing feasible conditions for a compact structural design and mounting within the chassis 1.

To facilitate the disassembly of the feeding hopper 1c, the bottom of the feeding groove 1b is provided with a communication pipe 11b communicating with the cold drink tank 5; the shape of the feeding hopper 1c is adapted to the feeding groove 1b to cover the surface of the feeding groove 1b.

The inner sidewall of the feeding hopper 1c is provided with a lifting edge 11c for manual lifting, so as to remove the feeding hopper 1c from the feeding groove 1b.

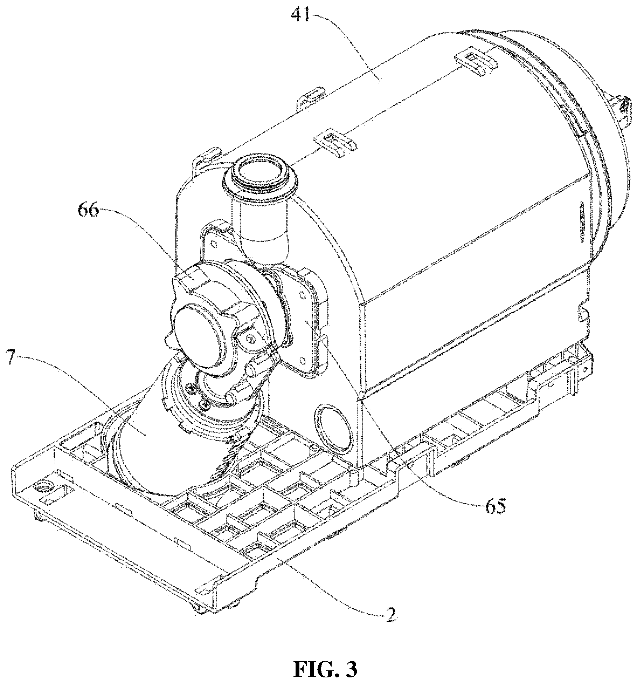

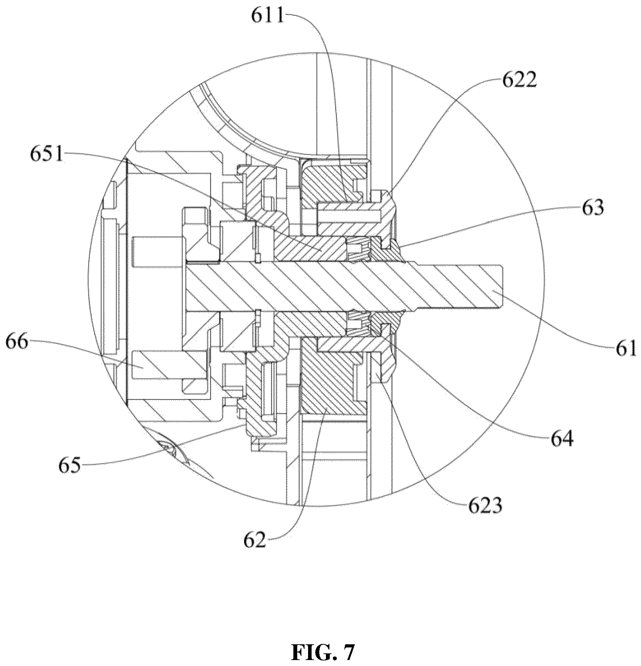

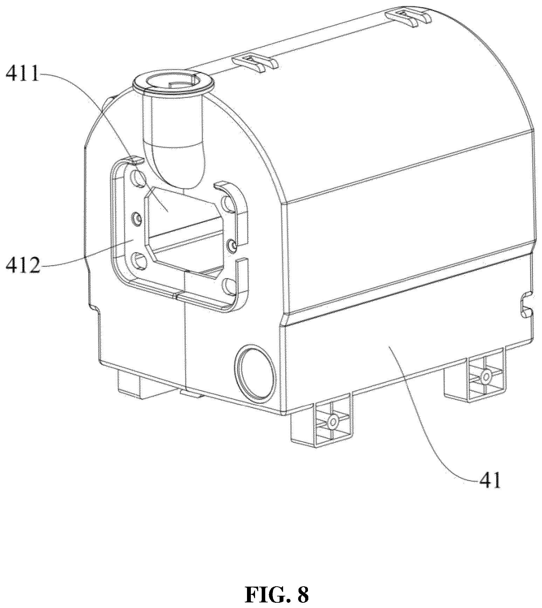

Referring to FIGS. 3 to 8, the driving apparatus 6 includes a rotating shaft 61 for driving the stirring member 51 to rotate and a first sealing connection seat 62.

The evaporator 4 is provided with a heat-insulating housing 41, and the sidewall of the heat-insulating housing 41 is provided with a first mounting hole 411. The cold drink tank 5 is mounted within the heat-insulating housing 41, the cold drink tank 5 is formed with a second mounting hole 52, and the rotating shaft 61 rotatably penetrates through the second mounting hole 52 and the first mounting hole 411. The first sealing connection seat 62 is connected between the heat-insulating housing 41 and the cold drink tank 5, the first sealing connection seat 62 is connected to a limiting member 621, the limiting member 621 is inserted into the second mounting hole 52, and the limiting member 621 is sealingly connected to the second mounting hole 52. The rotating shaft 61 penetrates through the limiting member 621, a first sealing member 63 is provided between the rotating shaft 61 and the limiting member 621, an inner ring of the first sealing member 63 is sealingly connected to the rotating shaft 61, and a clearance fit is formed between an outer ring of the first sealing member 63 and the limiting member 621.

Since the clearance fit is formed between the outer ring of the first sealing member 63 and the limiting member 621, when rotating, the rotating shaft 61 can form a rotary sealing connection with the first sealing connection seat 62 and the limiting member 621 through the first sealing member 63, so as to reduce the amount of wear on the first sealing member 63 caused by the wear on the rotating shaft 61, prolong the service life of the first sealing member 63, and ensure the sealing performance between the rotating shaft 61 and the first sealing connection seat 62, thereby effectively reducing the risk of liquid water leakage from the cold drink tank 5 and ensuring the ice-making rate of liquid water in the cold drink machine.

It should be noted that the first sealing member 63 is preferably made of a wear-resistant and corrosion-resistant material such as polytetrafluoroethylene (PTFE) or rubber to ensure that the first sealing member 63 can remain free from wear or corrosion during long-term use.

In this embodiment, the first sealing connection seat 62 may be limited and assembled in the second mounting hole 52 of the cold drink tank 5 by the limiting member 621, and the sealing performance between the first sealing connection seat 62 and the cold drink tank 5 is ensured by using the sealing connection between the limiting member 621 and the sidewall of the second mounting hole 52.

To ensure the sealing fit between the limiting member 621 and the second mounting hole 52, as shown in FIGS. 3 to 5, an end of the limiting member 621 that is inserted into the second mounting hole 52 is formed with an extension boss 622, an outer ring of the extension boss 622 sealingly abuts against the inner sidewall of the cold drink tank 5 via a sealing gasket 623, and an inner ring of the extension boss 622 is connected to the outer ring of the first sealing member 63, so as to ensure that the limiting member 621 limits and assemblies the first sealing member 63 on the rotating shaft 61. The sealing gasket 623 can be deformed under pressure to adaptively fill a gap between connection surfaces so that the sealing gasket 623 can be used to be adapted to an abutment gap between the extension boss 622 of the limiting member 621 and the inner sidewall of the cold drink tank 5, so as to enable a sealing contact between the limiting member 621 and the inner wall surface of the cold drink tank 5 and to prevent liquid in the cold drink tank 5 from leaking from an abutment position between the limiting member 621 and the inner wall surface of the cold drink tank 5, further reducing the risk of liquid water leakage from the cold drink tank 5.

Optionally, the limiting member 621 is made of an elastic material such as rubber. When the limiting member 621 is inserted into the second mounting hole 52, the sidewall of the limiting member 621 rebounds and tightly abuts against the sidewall surface of the second mounting hole 52 to further enhance the sealing performance between the limiting member 621 and the cold drink tank 5.

Certainly, the limiting member 621 is not limited to the elastic material such as rubber, but may also be made of a hard material. When the limiting member 621 is made of the hard material, the limiting member 621 may be detachably connected to the first sealing connection seat 62 to ensure the convenience of assembly between the limiting member 621 and the first sealing connection seat 62.

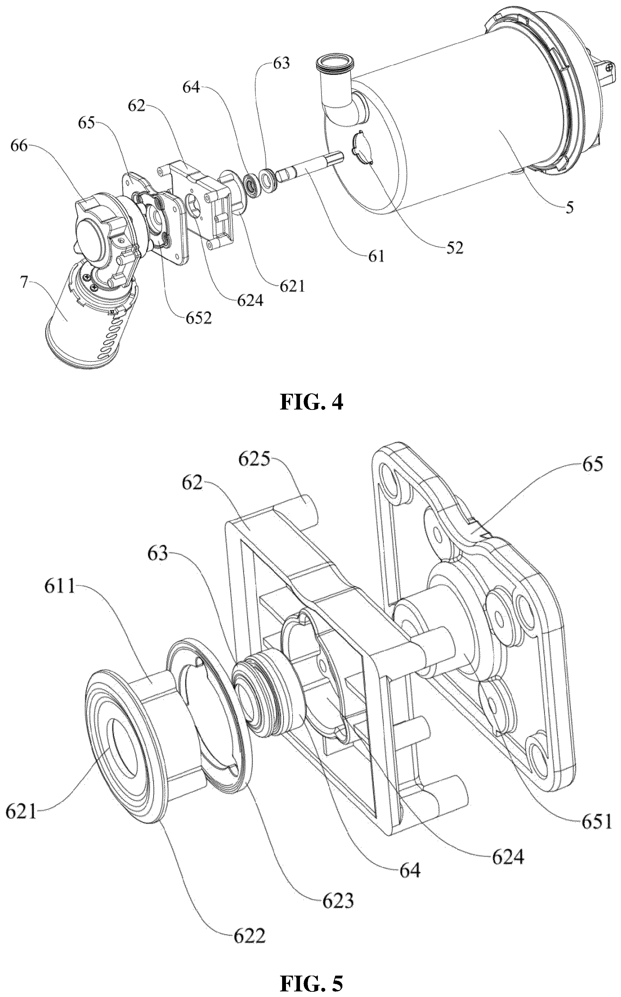

Specifically, as shown in FIGS. 3 and 5, the limiting member 621 is formed with a connection column 611, multiple threaded holes are spaced apart in the connection column 611, and the first sealing connection seat 62 is formed with multiple connection holes. When the first sealing connection seat 62 and the limiting member 621 are assembled on the cold drink tank 5, the connection column 611 of the limiting member 621 may pass through the second mounting hole 52, and the first sealing connection seat 62 is connected to the limiting member 621 by bolts or studs, thereby ensuring the convenience of assembly between the limiting member 621 and the first sealing connection seat 62.

Further, one side of the first sealing member 63 facing away from the cold drink tank 5 is provided with a second sealing member 64, an inner ring of the second sealing member 64 is sealingly connected to the rotating shaft 61, and an outer ring of the second sealing member 64 abuts against the limiting member 621 so that the second sealing member 64 can be used to further reduce a connection gap between the limiting member 621 and the rotating shaft 61, thereby further enhancing the sealing performance between the rotating shaft 61 and the limiting member 621.

Specifically, the inner ring of the second sealing member 64 is formed with a sealing lip surface, and the cross section of the sealing lip surface is an inclined surface so that an oil seal can be formed between the rotating shaft 61, the limiting member 621, and the first sealing connection seat 62 through the second sealing member 64, thereby using the second sealing member 64 to cooperate with the first sealing member 63 to provide stable and reliable sealing performance for the rotating shaft 61, the limiting member 621, and the first sealing connection seat 62.

In this embodiment, to ensure the mounting stability of the first sealing connection seat 62, the first sealing connection seat 62 is formed with a preset height, and the distance from the inner side surface of the heat-insulating housing 41 to the outer side surface of the cold drink tank 5 is equal to the preset height. Further, when the first sealing connection seat 62 is assembled between the heat -insulating housing 41 and the cold drink tank 5, the first sealing connection seat 62 can be clamped and secured by the inner side surface of the heat-insulating housing 41 and the outer wall surface of the cold drink tank 5, and the first sealing connection seat 62 is connected to the limiting member 621 penetrating through the second mounting hole 52, so as to ensure the assembly stability of the first sealing connection seat 62 between the heat-insulating housing 41 and the cold drink tank 5 and avoid affecting the sealing performance of the first sealing member 63 due to the shaking of the first sealing connection seat 62.

In this embodiment, as shown in FIGS. 2 to 5, the driving apparatus 6 further includes a second sealing connection seat 65 that is arranged on the outer sidewall of the heat-insulating housing 41, the second sealing connection seat 65 is detachably connected to the first sealing connection seat 62, and the size of the second sealing connection seat 65 is larger than the size of the first mounting hole 411. Further, when being connected to the outer sidewall of the heat-insulating housing 41, the second sealing connection seat 65 can shield the first mounting hole 411 to prevent internal components of the heat-insulating housing 41 from being exposed, thereby providing dust protection for the heat-insulating housing 41.

It should be noted that, to detachably connect the first sealing connection seat 62 to the second sealing connection seat 65, the first sealing connection seat 62 and the second sealing connection seat 65 are connected to form an integral sealing apparatus, one side of the first sealing connection seat 62 facing away from the cold drink tank 5 is formed with a connection boss 625, and the second sealing connection seat 65 is formed with a connection hole. When the first sealing connection seat 62 and the second sealing connection seat 65 are assembled, the connection boss 625 of the first sealing connection seat 62 passes through a mounting hole of the sidewall of the heat-insulating housing 41, and the first sealing connection seat 62 is threadedly connected to the second sealing connection seat 65 using bolts or studs.

Further, as shown in FIGS. 3 to 5, one side of the second sealing connection seat 65 facing the first sealing connection seat 62 is formed with a sealing boss 651, the first sealing connection seat 62 is formed with an insertion hole 624, the sealing boss 651 is inserted into the insertion hole 624, and an inner side of the sealing boss 651 abuts against the second sealing member 64, so as to utilize the sealing contact between the inner side surface of the sealing boss 651 and the second sealing member 64, so that a connection position of the first sealing connection seat 623 and the second sealing connection seat 65 can form a sealing connection, and the second sealing member 64 can be axially limited, further ensuring the sealing performance of the second sealing member 64 with respect to the first sealing connection seat 62 and the second sealing connection seat 65.

It should be noted that, in this embodiment, the insertion hole 624 is coaxial with the first mounting hole 411 and the second mounting hole 52, the sealing boss 651 is formed with a hollow hole, and the rotating shaft 61 is rotatably connected to the hollow hole, so as to utilize the sealing boss 651 of the second sealing connection seat 65 to limit and protect the rotating shaft 61, thereby further ensuring the rotation stability of the rotating shaft 61.

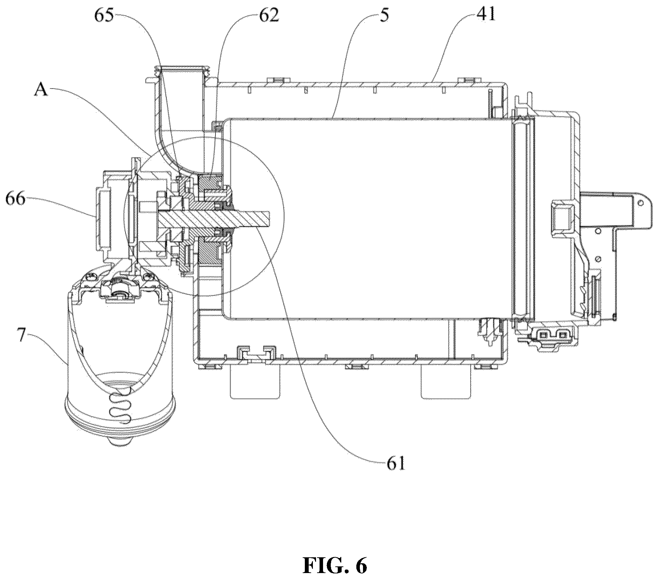

As shown in FIG. 6, the outer sidewall of the heat-insulating housing 41 is formed with a first mounting groove 412, and the second sealing connection seat 65 is embedded into the first mounting groove 412 so that the outer sidewall of the second sealing connection seat 65 can be limited and secured by the first mounting groove 412, further ensuring the stability of the second sealing connection seat 65 arranged on the heat-insulating housing 41.

In the embodiment of the present disclosure, as shown in FIGS. 1 and 2, the driving apparatus 6 further includes a driving connection seat 66, one side surface of the driving connection seat 66 is connected to the second sealing connection seat 65, and the other side surface of the driving connection seat 66 is connected to a driving member 7. A transmission group (not shown in the figures) is provided within the driving connection seat 66, an output shaft of the driving member 7 is rotatably connected to a driving end of the transmission group, and a driven end of the transmission group is rotatably connected to the rotating shaft 61. Further, the driving member 7 can be used to drive the driving end of the transmission group to rotate, and the driven end of the transmission group and the rotating shaft 61 can be driven to rotate so that the rotating shaft 61 can drive the stirring structure within the cold drink tank 5 to rotate, thereby transmitting an ice cube within the cold drink tank 5.

By providing dust protection for the transmission group, as well as connection parts between the transmission group, the driving member 7, and the rotating shaft 61 through the driving connection seat 66, direct exposure of the driving member 7, the transmission group, and the rotating shaft 61 to the external environment can be avoided, ensuring effective transmission among the driving member 7, the transmission group, and the rotating shaft 61 and guaranteeing the energy utilization of the driving member 7.

It should be noted that the driving connection seat 66 may include a first connection seat and a second connection seat that are detachably connected, so as to facilitate maintenance and inspection of the transmission group within the driving connection seat 66. The first connection seat is connected to a housing of a driving motor, and the second connection seat is connected to the second sealing connection seat 65. A front end of the rotating shaft 61 is rotatably connected to the second connection seat through a bearing to further ensure the rotation stability of the rotating shaft 61.

It should also be noted that a gear group is preferably used as the transmission group to transmit the driving member 7 and the rotating shaft 61 to reduce the space occupied by the driving connection seat 66 and improve the space utilization of sealing connection components within a material preparation housing. Certainly, the specific structure of the transmission group is not limited to the gear group and may also be another transmission structure such as chain transmission or belt transmission. The specific transmission structure of the transmission group may be set accordingly according to actual conditions.

As shown in FIG. 2, a side surface of the second sealing connection seat 65 facing away from the heat-insulating housing 41 is formed with a second mounting groove 652, and the one side surface of the driving connection seat 66 is embedded into the second mounting groove 652 so that the side surface of the second sealing connection seat 65 can be limited and secured by the second mounting groove 652, thereby ensuring the connection stability between the second sealing connection seat 65 and the driving connection seat 66.

It should be noted that, to further ensure the connection stability between the driving connection seat 66 and the second sealing connection seat 65, multiple threaded counterbored holes are formed in the second mounting groove 651, and multiple threaded holes are formed in the driving connection seat 66. When the one side surface of the driving connection seat 66 is embedded into the second mounting groove 652 via bolts or studs which are spirally connected to corresponding threaded holes and threaded counterbored holes, the connection stability between the driving connection seat 66 and the second sealing connection seat 65 can be improved.

Further, to increase the material storage capacity of the feeding groove 1b, an extension edge with a preset length extends upward from an opening of the feeding groove 1b to form a guiding channel housing communicating with the feeding groove 1b, and the guiding channel housing has a tubular structure. The guiding channel housing is provided with a cover to shield an upper port of the guiding channel housing.

The cold drink machine is an ice cream machine, a smoothie machine, or a multifunctional machine for making smoothies and ice cream, and can be used to make ice cream and smoothies.

The preceding are preferred embodiments of the present disclosure. It is to be noted that for those skilled in the art, a number of improvements and modifications may be made without departing from the principle of the present disclosure, and these improvements and modifications are within the scope of the present disclosure.

## Claims

1. A cold drink machine, comprising: a chassis, a separator substrate arranged within the chassis, a cold drink apparatus configured for making cold drinks, and a compressor for the cold drink apparatus to refrigerate,
wherein the chassis is divided into an upper device space and a lower device space by the separator substrate, and the cold drink apparatus and the compressor are arranged in the upper device space and the lower device space, respectively;
the cold drink apparatus comprises an evaporator, a cold drink tank arranged within the evaporator, a stirring member arranged within the cold drink tank, and a driving apparatus for driving the stirring member;
a front portion or a top portion of the chassis is provided with a display region, and the top portion of the chassis is provided with a feeding region; and
in the feeding region, the top portion of the chassis is concave to form a feeding groove, a detachable feeding hopper is arranged within the feeding groove, and the feeding hopper communicates with the cold drink tank.

2. The cold drink machine of claim 1, wherein in the display region, the front portion or the top portion of the chassis is tilted upward to form a display space within the chassis for mounting a display screen device, and the display region is provided with a display port for mounting a display panel.

3. The cold drink machine of claim 1, wherein the upper device space is divided into a refrigeration space and a driving heat dissipation space on the left and right, and the evaporator and the driving apparatus are placed in the refrigeration space and the driving heat dissipation space, respectively; and
on the chassis, a left end of the upper device space and a right end of the upper device space are provided with a discharging hole adapted to the cold drink tank and an upper heat dissipation port for heat dissipation, respectively.

4. The cold drink machine of claim 3, wherein the separator substrate is provided with a communication region for communicating the upper device space and the lower device space, and the communication region is provided with a plurality of communication holes; and
the communication region is arranged corresponding to the driving heat dissipation space.

5. The cold drink machine of claim 4, wherein two sides within the lower device space are provided with a bracket for assisting in supporting the separator substrate and a heat exchange housing for mounting a heat exchanger, respectively; and
the bracket and the heat exchange housing jointly assist in supporting the separator substrate.

6. The cold drink machine of claim 5, wherein the heat exchanger configured for the compressor is arranged within the heat exchange housing, an inner side of the heat exchange housing is provided with a cooling fan, and the cooling fan is located below the communication region.

7. The cold drink machine of claim 1, wherein a bottom of the feeding groove is provided with a communication pipe communicating with the cold drink tank; and
a shape of the feeding hopper is adapted to the feeding groove to cover a surface of the feeding groove.

8. The cold drink machine of claim 1, wherein the evaporator is provided with a heat-insulating housing, a sidewall of the heat-insulating housing is provided with a first mounting hole, and the driving apparatus comprises a rotating shaft for driving the stirring member to rotate and a first sealing connection seat;
the cold drink tank is mounted within the heat-insulating housing, the cold drink tank is provided with a second mounting hole, and the rotating shaft is configured to rotatably penetrate through the second mounting hole and the first mounting hole;
the first sealing connection seat is connected between the heat-insulating housing and the cold drink tank, the first sealing connection seat is connected to a limiting member, the limiting member is configured to be inserted into the second mounting hole, and the limiting member is sealingly connected to the second mounting hole; and
the rotating shaft is configured to penetrate through the limiting member, a first sealing member is provided between the rotating shaft and the limiting member, an inner ring of the first sealing member is sealingly connected to the rotating shaft, and a clearance fit is formed between an outer ring of the first sealing member and the limiting member.

9. The cold drink machine of claim 8, wherein an end of the limiting member that is inserted into the second mounting hole is formed with an extension boss, an outer ring of the extension boss sealingly abuts against an inner sidewall of the cold drink tank via a sealing gasket, and an inner ring of the extension boss is connected to the outer ring of the first sealing member; and one side of the first sealing member facing away from the cold drink tank is provided with a second sealing member, and an inner ring of the second sealing member is sealingly connected to the rotating shaft.

10. The cold drink machine of claim 9, wherein the driving apparatus further comprises a second sealing connection seat that is arranged on an outer sidewall of the heat-insulating housing, the second sealing connection seat is detachably connected to the first sealing connection seat, and a size of the second sealing connection seat is larger than a size of the first mounting hole;
one side of the second sealing connection seat facing the first sealing connection seat is formed with a sealing boss, the first sealing connection seat is formed with an insertion hole, the sealing boss is configured to be inserted into the insertion hole, and an inner side of the sealing boss abuts against the second sealing member; and
the outer sidewall of the heat-insulating housing is formed with a first mounting groove, and the second sealing connection seat is embedded into the first mounting groove.

11. The cold drink machine of claim 10, wherein the driving apparatus further comprises a driving connection seat, one side surface of the driving connection seat is connected to the second sealing connection seat, and the other side surface of the driving connection seat is connected to a driving member; a transmission group is provided within the driving connection seat, an output shaft of the driving member is rotatably connected to a driving end of the transmission group, and a driven end of the transmission group is rotatably connected to the rotating shaft; and
a side surface of the second sealing connection seat facing away from the heat-insulating housing is formed with a second mounting groove, and the one side surface of the driving connection seat is embedded into the second mounting groove.

12. The cold drink machine of any one of claims 1 to 11, wherein an extension edge with a preset length extends upward from an opening of the feeding groove to form a guiding channel housing communicating with the feeding groove.

13. The cold drink machine of any one of claims 1 to 11, wherein the cold drink machine is an ice cream machine, a smoothie machine, or a multifunctional machine for making smoothies and ice cream.
